# EUROPÄISCHE PATENTSCHRIFT

(11) **EP 4 233 110 B1**
(45) Veröffentlichungstag und Bekanntmachung des Hinweises auf die Patenterteilung: **14.08.2024**
(21) Anmeldenummer: 21801018.9
(22) Anmeldetag: 14.10.2021
(51) Int. Cl.: H01M 8/0254, H01M 8/0258

(54) **BIPOLARPLATTE FÜR EIN BRENNSTOFFZELLENSYSTEM**
BIPOLAR PLATE FOR A FUEL CELL SYSTEM
PLAQUE BIPOLAIRE POUR SYSTÈME DE PILE À COMBUSTIBLE

(30) Priorität: 20.10.2020 DE 102020213210
(43) Veröffentlichungstag der Anmeldung: 30.08.2023
(73) Patentinhaber: Robert Bosch GmbH, 70442 Stuttgart (DE)
(72) Erfinder: GLANZ, Leonore, 71679 Asperg (DE); SCHNEITER, Manuel, 71032 Boeblingen (DE)
(86) Internationale Anmeldenummer: PCT/EP2021/078406
(87) Internationale Veröffentlichungsnummer: WO 2022/084132

(56) Entgegenhaltungen:
- DE-A1- 102010 039 276
- DE-A1- 102015 205 295
- US-A1- 2006 046 130
- US-A1- 2014 057 194

## Beschreibung

Die Erfindung betrifft eine Bipolarplatte für ein Brennstoffzellensystem nach dem unabhängigen Vorrichtungsanspruch. Zudem betrifft die Erfindung ein entsprechendes Brennstoffzellensystem nach dem unabhängigen Systemanspruch.

### Stand der Technik

Bipolarplatten für Brennstoffzellen sind grundsätzlich bekannt. Die Verteilungskanäle für die Reaktanten und das Kühlmittel an den Bipolarplatten werden bspw. durch Prägen von planaren Platten ausgeformt. Bei der Auslegung der Verteilungskanäle müssen zumeist mehrere Optimierungsprobleme beachtet werden. Zum einen muss der hydraulische Diameter für die Reaktanten optimiert werden, damit der Druckabfall in die Flussrichtung der Reaktanten gesehen nicht zu hoch wird. Zum anderen muss die Höhe der Bipolarplatten reduziert werden, damit die Leistungsdichte des Systems erhöht wird. Weiterhin muss die Breite der Auflageflächen auf den Membran-Elektroden-Einheiten, insbesondere auf der Kathodenseite des Systems, reduziert werden, damit die Verluste beim Massentransport der Reaktanten bei Spitzenleistungen nicht zu hoch werden. Außerdem muss die Breite der Kanäle an sich reduziert werden, damit die Druckverteilung in der Mitte der Kanäle nicht zu niedrig wird.

Das Dokument US 2014/057194 A1 offenbart einen Brennstoffzellenstapel der MEAs (membrane electrode assembly) und Bipolarplatten umfasst, wobei die Bipolarplatte Kanäle, bzw. Kanalsrukturen aufweisen.

Das Dokument DE 10 2015 205295 A1 offenbart einen Brennstoffzellenstapel aus einer Kombination gestapelter Bipolarplattenanordnungen und MEAs, wobei zwei Bipolarplattenhälften miteinander verschweißt sind und Kühlkanäle ausbilden.

Das Dokument DE 10 2010 039276 A1 offenbart eine Bipolarplatte bestehend aus Anodenkanälen und Kathodenkanälen für Betriebsmedien und Temperierkanäle, wobei die Temperierkanäle breiter als die Betriebsmedienkanäle ausgebildet sind.

Das Dokument US 2006/046130 A1 offenbart einen Brennstoffzellenstapel, der eine Vielzahl von MEAs und Diffusionsmediumselementen umfasst, die zwischen einer Vielzahl von Bipolarplatten angeordnet sind.

### Offenbarung der Erfindung

Die Erfindung stellt gemäß einem ersten Aspekt bereit: eine Bipolarplatte für ein Brennstoffzellensystem mit den Merkmalen des unabhängigen Vorrichtungsanspruches, insbesondere aus dem kennzeichnenden Teil des unabhängigen Vorrichtungsanspruches. Die Erfindung stellt gemäß einem zweiten Aspekt bereit: ein entsprechendes Brennstoffzellensystem nach dem unabhängigen Systemanspruch. Dabei gelten Merkmale und Details, die im Zusammenhang mit den einzelnen erfindungsgemäßen Aspekten beschrieben sind, selbstverständlich auch im Zusammenhang mit den anderen erfindungsgemäßen Aspekten und jeweils umgekehrt, sodass bezüglich der Offenbarung zu den einzelnen Erfindungsaspekten stets wechselseitig Bezug genommen wird bzw. werden kann.

Die vorliegende Erfindung sieht gemäß dem ersten Aspekt vor: eine Bipolarplatte für ein Brennstoffzellensystem, die folgende Elemente aufweist: eine kathodenseitige Platte, die auf einer ersten Seite eine erste Kanalstruktur für einen sauerstoffhaltigen Reaktanten bzw. ein Oxidationsmittel und auf einer zweiten Seite eine zweite Kanalstruktur für ein Kühlmittel aufweist, und eine anodenseitige Platte, die auf einer ersten Seite eine erste Kanalstruktur für einen brennstoffhaltigen Reaktanten und auf einer zweiten Seite eine zweite Kanalstruktur für ein Kühlmittel aufweist, wobei die kathodenseitige Platte und die anodenseitige Platte mit den zweiten Seiten für das Kühlmittel aufeinander anliegen. Hierzu ist vorgesehen, dass sich die erste Kanalstruktur der kathodenseitigen Platte von der zweiten Kanalstruktur der (gemeint ist dergleichen) kathodenseitigen Platte geometrisch unterscheidet.

Erfindungsgemäß sieht die Erfindung bei einer Bipolarplatte vor, dass die kathodenseitige Platte in eine Richtung quer zu einzelnen Kanälen der ersten Kanalstruktur und der zweiten Kanalstruktur gesehen abwechselnd ein Kanal für das Kühlmittel und zwei Kanäle für den sauerstoffhaltigen Reaktanten aufweist.

Ein Brennstoffzellensystem im Sinne der Erfindung kann mehrere Brennstoffzellen aufweisen, die durch jeweils eine Bipolarplatte voneinander getrennt und die in Form eines Stapels aufeinander angeordnet sind. Von den Endseiten kann der Stapel durch monopolare Endplatten begrenzt sein.

Die Kanalstrukturen im Sinne der Erfindung können bspw. durch Umformen bzw. bildsame Formgebung, wie z. B. Fließpressen, Strangpressen, Tiefziehen und Biegen, in planare Platten eingebracht werden, die später als kathodenseitige Platten oder anodenseitige Platten dienen werden. Außerdem können fertig ausgeformte Platten durch Gießen in einem Formwerkzeug hergestellt werden.

Wenn eine klassische Rillenstruktur in eine planare Platte eingebracht, bspw. eingeprägt, wird, hat eine solche Rillenstruktur mit dem Blick auf eine Seite der Platte Vertiefungen, die mit dem Blick auf die andere Seite der Platte entsprechende Erhebungen darstellen. Dabei spricht die Erfindung von Kanalstrukturen, die auf beiden Seiten der umgeformten Platte, geometrisch gleich ausgebildet sind.

Die Erfindung sieht bewusst eine geometrisch unterschiedliche Ausgestaltung der ersten Kanalstruktur auf der ersten Seite der kathodenseitigen Platte und der zweiten Kanalstruktur auf der zweiten Seite der kathodenseitigen Platte. Eine geometrisch unterschiedliche Ausgestaltung bedeutet im Sinne der Erfindung, dass die erste Kanalstruktur an der kathodenseitigen Platte nicht ein genaues Negativabbild der zweiten Kanalstruktur darstellen muss. Das heißt z. B., dass mit dem Blick auf eine Seite der kathodenseitigen Platte eine Vertiefung mit dem Blick auf die andere Seite der kathodenseitigen Platte nicht zugleich einer, insbesondere nur einer, Erhebung entsprechen muss oder umgekehrt.

Im Rahmen der Erfindung können an der kathodenseitigen Platte angrenzend an jeden Kühlmittelkanal zwei Reaktantenkanäle folgen. Mit anderen Worten können an der kathodenseitigen Platte abwechselnd nach jedem Kanal für das Kühlmittel zwei Kanäle für den sauerstoffhaltigen Reaktanten bereitgestellt werden. Folglich können gemäß der Erfindung zwei Oxidationsmittelkanäle für jeden Kühlmittelkanal bereitgestellt werden. Insbesondere kann die Erfindung vorsehen, dass die Kanäle für den sauerstoffhaltigen Reaktanten zweigeteilt oder doppelt ausgebildet sind. Im Rahmen der Erfindung können die Kanäle für den sauerstoffhaltigen Reaktanten durch einen Steg voneinander getrennt sein, der als ein zusätzliches Landing bei der Auflage auf einer Kathodenseite einer Membranen-Elektroden-Einheit dienen kann.

Auf der anodenseitigen Platte können im Rahmen der Erfindung die Kanalstrukturen sowohl geometrisch gleich als auch geometrisch unterschiedlich ausgeformt sein.

Mithilfe der Erfindung kann die zweite Kanalstruktur an der kathodenseitigen Platte für einen großen hydraulischen Durchmesser des Kühlmittelkanals sorgen. Zugleich kann mithilfe der Erfindung sichergestellt werden, dass auf der ersten Seite der kathodenseitigen Platte kleine Landings zur Auflage auf der Kathodenseite der Membranen-Elektroden-Einheit bereitgestellt werden können. Außerdem kann mithilfe der Erfindung ermöglicht werden, dass zum Ausformen der Kühlmittelkanäle an der kathodenseitigen Platte größere Entformungswinkel, sog. draft angles, genutzt werden können.

Ferner kann die Erfindung bei einer Bipolarplatte vorsehen, dass die erste Kanalstruktur der kathodenseitigen Platte doppelte und/oder zweigeteilte Kanäle für den sauerstoffhaltigen Reaktanten aufweist, und/oder dass die zweite Kanalstruktur der kathodenseitigen Platte einfache Kanäle für das Kühlmittel aufweist. Somit können relativ breite Kanäle für das Kühlmittel bereitgestellt werden, um Druckverluste in die Flussrichtung des Kühlmittels zu reduzieren. Zugleich können somit kleinere Landings zur Auflage auf der Kathodenseite der Membranen-Elektroden-Einheit bereitgestellt werden können, um Produktwasseransammlungen unter den Landings zu vermeiden und bessere Druckverteilung entlang der kathodenseitigen Platte beim Verpressen der Brennstoffzellen zu einem Stapel zu ermöglichen.

Weiterhin kann die Erfindung bei einer Bipolarplatte vorsehen, dass die doppelten Kanäle der ersten Kanalstruktur durch einen Steg voneinander getrennt sind. Vorteilhafterweise kann der Steg zwischen den Oxidationsmittelkanälen eine zentrale Stützsäule bilden, um eine verbesserte Druckverteilung entlang der kathodenseitigen Platte beim Verpressen der Brennstoffzellen zu einem Stapel zu erreichen. Das zentrale Landing unter dem Steg kann bspw. abgerundet ausgebildet sein.

Des Weiteren kann die Erfindung bei einer Bipolarplatte vorsehen, dass die doppelten Kanäle der ersten Kanalstruktur durch zwei unabhängig voneinander geprägte Rillen ausgebildet sind. Somit kann die kathodenseitige Platte durchgehend mit einer im Wesentlichen gleichen Materialstärke bereitgestellt werden. Auf diese Weise kann die kathodenseitige Platte einfach und kostengünstig hergestellt werden, bspw. durch eine bildsame Formgebung.

Zudem kann die Erfindung bei einer Bipolarplatte vorsehen, dass sich die erste Kanalstruktur der anodenseitigen Platte von der zweiten Kanalstruktur der anodenseitigen Platte geometrisch unterscheidet. Dabei ist es denkbar, dass die anodenseitige Platte ähnlich wie die kathodenseitige Platte ausgeformt sein kann. Dabei kann ebenfalls vorgesehen sein, dass die anodenseitige Platte in eine Richtung quer zu einzelnen Kanälen der ersten Kanalstruktur und der zweiten Kanalstruktur gesehen abwechselnd ein Kanal für das Kühlmittel und zwei Kanäle für den brennstoffhaltigen Reaktanten aufweisen kann. Vorteilhafterweise können die beiden Platten der Bipolarplatte so aufeinander gelegt werden, dass die Stege in den doppelten Reaktantenkanälen übereinander liegen. Auf diese Weise können an den Kontaktflächen zwischen den beiden Platten der Bipolarplatte breitere Auflageflächen hergestellt werden. Somit kann verhindert werden, dass die Platten ineinander rutschen und sich ineinander verschachteln. Auch können somit die elektrischen Kontaktverluste zwischen den Platten verringert werden. Aufgrund der breiteren Auflageflächen in der Mitte der Reaktantenkanäle kann des Weiteren die Höhe der Kanäle reduziert werden.

Grundsätzlich ist es aber auch denkbar, dass die erste Kanalstruktur der anodenseitigen Platte und die zweite Kanalstruktur der anodenseitigen Platte geometrisch gleich ausgebildet sein können. Da auf der Anodenseite einer Brennstoffzelle das Problem von Ansammlungen des Produktwassers nicht entsteht und der brennstoffhaltige Reaktant in höherer Konzentration bereitgestellt wird als der sauerstoffhaltige Reaktant, kann auf der Anodenseite eine klassische kostengünstige geprägte Platte eingesetzt werden, die mit dem Blick auf eine Seite Vertiefungen aufweist, die mit dem Blick auf die andere Seite der Platte entsprechende Erhebungen darstellen.

Außerdem kann die Erfindung bei einer Bipolarplatte vorsehen, dass die erste Kanalstruktur an der anodenseitigen Platte Landings unter den Kanälen für das Kühlmittel aufweist, die zur Auflage auf einer Anode einer Brennstoffzelle des Brennstoffzellensystems ausgebildet sind, und dass die erste Kanalstruktur an der kathodenseitigen Platte Landings unter den Kanälen für das Kühlmittel aufweist, die zur Auflage auf einer Kathode einer Brennstoffzelle des Brennstoffzellensystems ausgebildet sind, wobei die Landings an der anodenseitigen Platte eine größere Breite aufweisen als eine Breite von Landings an der kathodenseitigen Platte. Auf diese Weise können die Kühlmittelkanäle im Wesentlichen auf die Anodenseite der Bipolarplatte verschoben werden. Dadurch können wiederum breitere Kanäle für den sauerstoffhaltigen Reaktanten an der kathodenseitigen Platte ermöglicht werden.

Ferner kann die Erfindung bei einer Bipolarplatte vorsehen, dass ein Entformungswinkel von Kanälen für das Kühlmittel an der anodenseitigen Platte kleiner ist als ein Entformungswinkel von Kanälen für das Kühlmittel an der kathodenseitigen Platte. Auf diese Weise können die Landings an der kathodenseitigen Platte verkleinert werden, da gerade dort sich das Produktwasser unter den Landings ansammeln kann.

Weiterhin kann die Erfindung bei einer Bipolarplatte vorsehen, dass eine Höhe von Kanälen für das Kühlmittel an der anodenseitigen Platte kleiner ist als eine Höhe von Kanälen für das Kühlmittel an der kathodenseitigen Platte. Auch somit können die Kühlmittelkanäle im Wesentlichen auf die Anodenseite der Bipolarplatte verschoben werden.

Die vorliegende Erfindung sieht gemäß dem zweiten Aspekt vor: ein Brennstoffzellensystem mit mindestens einer Bipolarplatte, die wie oben beschrieben ausgebildet sein kann. Mithilfe des erfindungsgemäßen Brennstoffzellensystems können die gleichen Vorteile erreicht werden, die oben im Zusammenhang mit der erfindungsgemäßen Bipolarplatte beschrieben wurden. Auf diese Vorteile wird vorliegend vollumfänglich Bezug genommen.

Die Erfindung und deren Weiterbildungen sowie deren Vorteile werden nachfolgend anhand der Zeichnung näher erläutert. Es zeigt dabei schematisch:

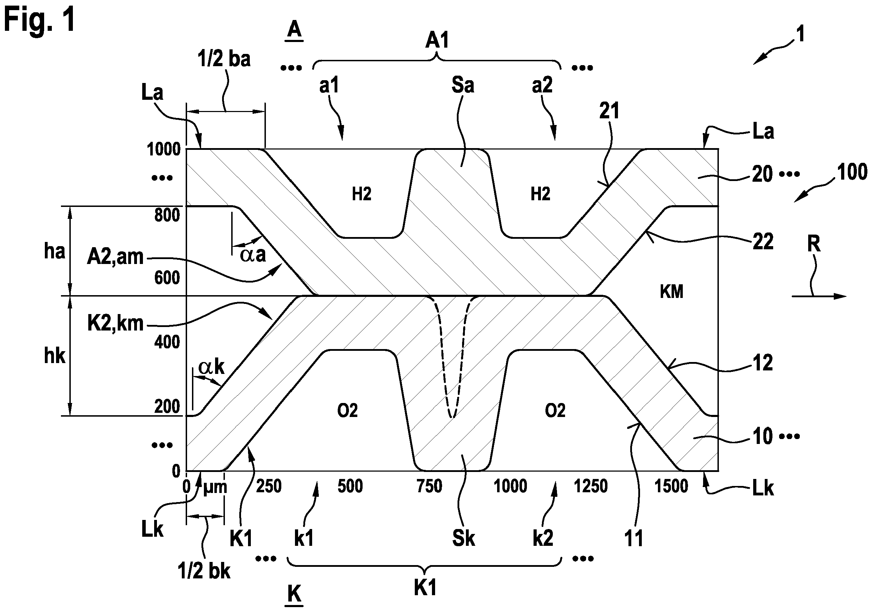

- Fig. 1: eine Bipolarplatte im Sinne der Erfindung,

Die Figur 1 zeigt eine Bipolarplatte 100 im Sinne der Erfindung, die für ein Brennstoffzellensystem 1 ausgeführt ist. Das Brennstoffzellensystem 1 mit mindestens einer entsprechenden Bipolarplatte 100 stellt ebenfalls einen Aspekt der Erfindung dar. Das Brennstoffzellensystem 1 im Sinne der Erfindung kann mehrere Brennstoffzellen aufweisen, die in einem Stapel bereitgestellt sind. Zwischen jeweils zwei Brennstoffzellen wird eine Bipolarplatte 100 im Sinne der Erfindung angeordnet. An den Endseiten des Stapels werden zumeist Monopolarplatten zum Begrenzen des Stapels vorgesehen.

Die Bipolarplatte 100 im Sinne der Erfindung weist folgende Elemente auf: eine kathodenseitige Platte 10, die auf einer ersten Seite 11 eine erste Kanalstruktur K1 für einen sauerstoffhaltigen Reaktanten O2 bzw. ein Oxidationsmittel und auf einer zweiten Seite 12 eine zweite Kanalstruktur K2 für ein Kühlmittel KM aufweist, und eine anodenseitige Platte 20, die auf einer ersten Seite 21 eine erste Kanalstruktur A1 für einen brennstoffhaltigen Reaktanten H2 und auf einer zweiten Seite 22 eine zweite Kanalstruktur A2 für ein Kühlmittel KM aufweist, wobei die kathodenseitige Platte 10 und die anodenseitige Platte 20 mit den zweiten Seiten 12, 22 für das Kühlmittel KM aufeinander anliegen.

Die Erfindung sieht vor, dass sich die erste Kanalstruktur K1 der kathodenseitigen Platte 10 von der zweiten Kanalstruktur K2 der (gemeint ist dergleichen) kathodenseitigen Platte 10 geometrisch unterscheidet.

Die Erfindung sieht bewusst geometrisch unterschiedliche Kanalstrukturen K1, K2 auf der ersten Seite 11 der kathodenseitigen Platte 10 und auf der zweiten Seite 12 der kathodenseitigen Platte 10 vor. Das heißt im Sinne der Erfindung, dass die erste Kanalstruktur K1 auf der ersten Seite 11 der kathodenseitigen Platte 10 nicht ein genaues Negativabbild der zweiten Kanalstruktur K2 auf der zweiten Seite 12 der kathodenseitigen Platte 10 sein muss. Mit anderen Worten heißt das, dass eine Vertiefung mit dem Blick auf eine Seite der kathodenseitigen Platte 10 nicht zugleich eine, insbesondere nur eine, Erhebung mit dem Blick auf die andere Seite der kathodenseitigen Platte 10 abbilden muss oder umgekehrt.

Im Rahmen der Erfindung können an der kathodenseitigen Platte 10 angrenzend an jeden Kühlmittelkanal km zwei Kanäle k1, k2 für den sauerstoffhaltigen Reaktanten O2 angeordnet sein. Somit können für jeden Kühlmittelkanal km zwei Oxidationsmittelkanäle k1, k2 bereitgestellt werden.

Wie es die Figur 1 zeigt, können die Kanäle k1, k2 für den sauerstoffhaltigen Reaktanten O2 zweigeteilt oder doppelt ausgebildet sein. Dabei ist es denkbar, dass die Kanäle k1, k2 für den sauerstoffhaltigen Reaktanten O2 durch einen Steg Sk voneinander getrennt sein können, der als ein zusätzliches Landing Lk bei der Auflage auf einer Kathodenseite einer Membranen-Elektroden-Einheit oder einfach ausgedrückt auf einer Kathode K einer Brennstoffzelle dienen kann. Zugleich ist es aber auch denkbar, dass der Steg Sk durch eine Falte wischen zwei eng anliegenden Rillen in der kathodenseitigen Platte 10 bereitgestellt werden kann, wie dies die Figur 1 mit einer unterbrochenen Linie andeutet.

Auf der anodenseitigen Platte 20 können die Kanalstrukturen A1, A2 sowohl geometrisch gleich (aus Einfachheitsgründen nicht gezeigt) als auch geometrisch unterschiedlich ausgeformt sein (wie dies in der Figur 1 dargestellt ist).

Die erfindungsgemäße Bipolarplatte 100 kann für einen großen hydraulischen Durchmesser des Kühlmittelkanals KM sorgen, um Druckverluste in die Flussrichtung des Kühlmittels KM zu reduzieren. Zugleich kann die erfindungsgemäße Bipolarplatte 100 ermöglichen, dass auf der ersten Seite 11 der kathodenseitigen Platte 10 relativ kleine Landings Lk zur Auflage auf der Kathode K einer entsprechenden Brennstoffzelle bereitgestellt werden können, um Produktwasseransammlungen unter den Landings Lk zu vermeiden und bessere Druckverteilung entlang der kathodenseitigen Platte 10 beim Verpressen der Brennstoffzellen zu einem Stapel zu ermöglichen.

Wie oben bereits erwähnt und wie es in der Figur 1 dargestellt ist, unterscheiden sich die erste Kanalstruktur A1 der anodenseitigen Platte 20 von der zweiten Kanalstruktur A2 der anodenseitigen Platte 20 ebenfalls geometrisch Dabei ist es denkbar, dass die anodenseitige Platte 20 ähnlich wie die kathodenseitige Platte 10 ausgebildet sein kann. Dabei weisen die anodenseitige Platte 20 in eine Richtung R quer zu einzelnen Kanälen a1, a2, km der ersten Kanalstruktur A1 und der zweiten Kanalstruktur A2 gesehen abwechselnd ein Kanal am für das Kühlmittel KM und zwei Kanäle a1, a2 für den brennstoffhaltigen Reaktanten H2 auf.

Wie es in der Figur 1 gezeigt ist, kann dabei der Kanal am für das Kühlmittel KM an der anodenseitigen Platte 20 fluidisch in den Kanal km das Kühlmittel KM an der kathodenseitigen Platte 10 übergehen bzw. einen gemeinsamen Kühlmittelkanal bilden.

Wie es in der Figur 1 gezeigt ist, können die beiden Platten 10, 20 der Bipolarplatte 100 so aufeinander gelegt werden, dass die Stege Sa, Sk in den doppelten Reaktantenkanälen k1, k2 und a1, a2 übereinander liegen. Auf diese Weise können an den Kontaktflächen zwischen den beiden Platten 10, 20 der Bipolarplatte 100 breitere Auflageflächen bereitgestellt werden, um zu verhindern, dass die Platten 10, 20 ineinander rutschen und sich ineinander verschachteln. Auch können somit die elektrischen Kontaktverluste zwischen den Platten 10, 20 verringert werden. Aufgrund der breiteren Auflageflächen in der Mitte der doppelten Reaktantenkanälen k1, k2 und a1, a2 kann weiterhin die Höhe der Kanäle reduziert werden.

Zugleich ist es aber auch denkbar, was in der Figur 1 lediglich aus Einfachheitsgründen nicht gezeigt ist, dass die erste Kanalstruktur A1 der anodenseitigen Platte 20 und die zweite Kanalstruktur A2 der anodenseitigen Platte 20 geometrisch gleich ausgebildet sein können. Dies ist möglich, da auf der Anodenseite A einer Brennstoffzelle das Problem von Ansammlungen des Produktwassers nicht entsteht und der brennstoffhaltig Reaktant H2 in höherer Konzentration bereitgestellt wird als der sauerstoffhaltige Reaktant O2, kann auf der Anodenseite A eine klassische Platte eingesetzt werden, die mit dem Blick auf eine Seite der anodenseitigen Platte 20 Vertiefungen aufweist, die mit dem Blick auf die andere Seite der anodenseitigen Platte 20 entsprechende Erhebungen abbilden.

Wie es die Figur 1 andeutet, kann die erste Kanalstruktur A1 an der anodenseitigen Platte 20 Landings La unter den Kanälen am für das Kühlmittel KM aufweisen, die zur Auflage auf einer Anode A einer entsprechenden Brennstoffzelle des Brennstoffzellensystems 1 ausgebildet sind. Die erste Kanalstruktur K1 an der kathodenseitigen Platte 10 kann wiederum Landings Lk unter den Kanälen km für das Kühlmittel KM aufweisen, die zur Auflage auf einer Kathode K einer angrenzenden Brennstoffzelle des Brennstoffzellensystems 1 ausgebildet sind. Dabei können die Landings La an der anodenseitigen Platte 20 eine größere Breite ba aufweisen als eine Breite bk von Landings Lk an der kathodenseitigen Platte 10. Auf diese Weise können die Kühlmittelkanäle im Wesentlichen auf die Anodenseite A der Bipolarplatte 100 verschoben werden. Dadurch können wiederum breitere Kanäle k1, k2 für den sauerstoffhaltigen Reaktanten O2 an der kathodenseitigen Platte 10 ermöglicht werden.

Wie es die Figur 1 ferner andeutet, kann ein Entformungswinkel aa von Kanälen am für das Kühlmittel KM an der anodenseitigen Platte 20 kleiner sein als ein Entformungswinkel ak von Kanälen km für das Kühlmittel KM an der kathodenseitigen Platte 10. Auf diese Weise können die Landings Lk an der kathodenseitigen Platte 10 verkleinert werden, da gerade dort sich das Produktwasser unter den Landings Lk ansammeln kann. Auf diese Weise können insbesondere bei hohen Stromdichten, Massentransportverluste des sauerstoffhaltigen Reaktanten O2 reduziert werden.

Weiterhin zeigt die Figur 1, dass eine Höhe ha von Kanälen am für das Kühlmittel KM an der anodenseitigen Platte 20 kleiner sein kann als eine Höhe hk von Kanälen km für das Kühlmittel KM an der kathodenseitigen Platte 10. Auch somit können die Kühlmittelkanäle im Wesentlichen auf die Anodenseite A der Bipolarplatte 100 verschoben werden.

Die in der Figur 1 gezeigten Zahlen sind lediglich beispielhaft. Die voranstehende Beschreibung der Figur 1 beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen.

## Patentansprüche

1. Bipolarplatte (100) für ein Brennstoffzellensystem (1),
aufweisend:
eine kathodenseitige Platte (10),
die auf einer ersten Seite (11) eine erste Kanalstruktur (K1) für einen sauerstoffhaltigen Reaktanten (O2) und
auf einer zweiten Seite (12) eine zweite Kanalstruktur (K2) für ein Kühlmittel (KM) aufweist, und
eine anodenseitige Platte (20),
die auf einer ersten Seite (21) eine erste Kanalstruktur (A1) für einen brennstoffhaltigen Reaktanten (H2) und
auf einer zweiten Seite (22) eine zweite Kanalstruktur (A2) für ein Kühlmittel (KM) aufweist,
wobei die kathodenseitige Platte (10) und die anodenseitige Platte (20) mit den zweiten Seiten (12, 22) für das Kühlmittel (KM) aufeinander anliegen,
**dadurch gekennzeichnet,**
**dass** sich die erste Kanalstruktur (K1) der kathodenseitigen Platte (10) von der zweiten Kanalstruktur (K2) der kathodenseitigen Platte (10) geometrisch unterscheidet,
**dadurch gekennzeichnet,**
**dass** die kathodenseitige Platte (10) in eine Richtung (R) quer zu einzelnen Kanälen (k1, k2, km) der ersten Kanalstruktur (K1) und der zweiten Kanalstruktur (K2) gesehen
abwechselnd ein Kanal (km) für das Kühlmittel (KM) und zwei Kanäle (k1, k2) für den sauerstoffhaltigen Reaktanten (O2) aufweist.

2. Bipolarplatte (100) nach Anspruch 1,
**dadurch gekennzeichnet,**
**dass** die erste Kanalstruktur (K1) der kathodenseitigen Platte (10) doppelte und/oder zweigeteilte Kanäle (k1, k2) für den sauerstoffhaltigen Reaktanten (O2) aufweist,
und/oder dass die zweite Kanalstruktur (K2) der kathodenseitigen Platte (10) einfache Kanäle (km) für das Kühlmittel (KM) aufweist.

3. Bipolarplatte (100) nach dem vorhergehenden Anspruch,
**dadurch gekennzeichnet,**
**dass** die doppelten Kanäle (k1, k2) der ersten Kanalstruktur (K1) durch einen Steg (Sk) voneinander getrennt sind,
und/oder dass die doppelten Kanäle (k1, k2) der ersten Kanalstruktur (K1) durch zwei unabhängig voneinander geprägte Rillen ausgebildet sind.

4. Bipolarplatte (100) nach einem der vorhergehenden Ansprüche, **dadurch gekennzeichnet,**
**dass** sich die erste Kanalstruktur (A1) der anodenseitigen Platte (20) von der zweiten Kanalstruktur (A2) der anodenseitigen Platte (20) geometrisch unterscheidet.

5. Bipolarplatte (100) nach dem vorhergehenden Anspruch,
**dadurch gekennzeichnet,**
**dass** die anodenseitige Platte (20) in eine Richtung (R) quer zu einzelnen Kanälen (a1, a2, am) der ersten Kanalstruktur (A1) und der zweiten Kanalstruktur (A2) gesehen
abwechselnd ein Kanal (am) für das Kühlmittel (KM) und zwei Kanäle (a1, a2) für den brennstoffhaltigen Reaktanten (H2) aufweist.

6. Bipolarplatte (100) nach einem der vorhergehenden Ansprüche 1 bis 3, **dadurch gekennzeichnet,**
**dass** die erste Kanalstruktur (A1) der anodenseitigen Platte (20) und die zweite Kanalstruktur (A2) der anodenseitigen Platte (20) geometrisch gleich ausgebildet sind.

7. Bipolarplatte (100) nach einem der vorhergehenden Ansprüche,
**dadurch gekennzeichnet,**
**dass** die erste Kanalstruktur (A1) an der anodenseitigen Platte (20) Landings (La) unter den Kanälen (am) für das Kühlmittel (KM) aufweist,
die zur Auflage auf einer Anode (A) einer Brennstoffzelle des Brennstoffzellensystems (1) ausgebildet sind,
und **dass** die erste Kanalstruktur (K1) an der kathodenseitigen Platte (10) Landings (Lk) unter den Kanälen (km) für das Kühlmittel (KM) aufweist,
die zur Auflage auf einer Kathode (K) einer Brennstoffzelle des Brennstoffzellensystems (1) ausgebildet sind,
wobei die Landings (La) an der anodenseitigen Platte (20) eine größere Breite (ba) aufweisen als
eine Breite (bk) von Landings (Lk) an der kathodenseitigen Platte (10).

8. Bipolarplatte (100) nach einem der vorhergehenden Ansprüche,
**dadurch gekennzeichnet,**
**dass** ein Entformungswinkel (aa) von Kanälen (am) für das Kühlmittel (KM) an der anodenseitigen Platte (20) kleiner ist als
ein Entformungswinkel (ak) von Kanälen (km) für das Kühlmittel (KM) an der kathodenseitigen Platte (10).

9. Bipolarplatte (100) nach einem der vorhergehenden Ansprüche, **dadurch gekennzeichnet,**
**dass** eine Höhe (ha) von Kanälen (am) für das Kühlmittel (KM) an der anodenseitigen Platte (20) kleiner ist als
eine Höhe (hk) von Kanälen (km) für das Kühlmittel (KM) an der kathodenseitigen Platte (10).

10. Brennstoffzellensystem (1) mit mindestens einer Bipolarplatte (100) nach einem der vorhergehenden Ansprüche.

## Claims

1. Bipolar plate (100) for a fuel cell system (1),
having:
a cathode-side plate (10),
having a first channel structure (K1) for an oxygen-containing reactant (O2) on a first side (11) and
a second channel structure (K2) for a coolant (KM) on a second side (12), and
an anode-side plate (20),
having a first channel structure (A1) for a fuel-containing reactant (H2) on a first side (21) and
a second channel structure (A2) for a coolant (KM) on a second side (22),
where the cathode-site plate (10) and the anode-side plate (20) adjoin one another by their second sides (12, 22) for the coolant (KM),
**characterized in that**
the first channel structure (K1) of the cathode-side plate (10) differs geometrically from the second channel structure (K2) of the cathode-side plate (10),
**characterized in that**
the cathode-side plate (10), viewed in a direction (R) transverse to individual channels (k1, k2, km) of the first channel structure (K1) and of the second channel structure (K2),
alternately has a channel (km) for the coolant (KM) and two channels (k1, k2) for the oxygen-containing reactant (O2).

2. Bipolar plate (100) according to Claim 1,
**characterized in that**
the first channel structure (K1) of the cathode-side plate (10) has double and/or halved channels (k1, k2) for the oxygen-containing reactant (O2), and/or **in that** the second channel structure (K2) of the cathode-side plate (10) has single channels (km) for the coolant (KM).

3. Bipolar plate (100) according to the preceding claim,
**characterized in that**
the double channels (k1, k2) of the first channel structure (K1) are separated from one another by a fillet (Sk),
and/or **in that** the double channels (k1, k2) of the first channel structure (K1) are formed by two independently embossed grooves.

4. Bipolar plate (100) according to any of the preceding claims,
**characterized in that**
the first channel structure (A1) of the anode-side plate (20) differs geometrically from the second channel structure (A2) of the anode-side plate (20).

5. Bipolar plate (100) according to the preceding claim,
**characterized in that**
the anode-side plate (20), viewed in a direction (R) transverse to individual channels (a1, a2, am) of the first channel structure (A1) and of the second channel structure (A2),
alternately has a channel (am) for the coolant (KM) and two channels (a1, a2) for the fuel-containing reactant (H2).

6. Bipolar plate (100) according to any of the preceding Claims 1 to 3,
**characterized in that**
the first channel structure (A1) of the anode-side plate (20) and the second channel structure (A2) of the anode-side plate (20) are geometrically identical.

7. Bipolar plate (100) according to any of the preceding claims,
**characterized in that**
the first channel structure (A1) on the anode-side plate (20) has landings (La) beneath the channels (am) for the coolant (KM),
which are designed to abut an anode (A) of a fuel cell of the fuel cell system (1),
and **in that** the first channel structure (K1) on the cathode-side plate (10) has landings (Lk) beneath the channels (km) for the coolant (KM),
which are designed to abut a cathode (K) of a fuel cell of the fuel cell system (1),
where the landings (La) on the anode-side plate (20) have a greater width (ba) than
a width (bk) of landings (Lk) on the cathode-side plate (10).

8. Bipolar plate (100) according to any of the preceding claims,
**characterized in that**
a demoulding angle (αa) of channels (am) for the coolant (KM) on the anode-side plate (20) is less than
a demoulding angle (αk) of channels (km) for the coolant (KM) on the cathode-side plate (10).

9. Bipolar plate (100) according to any of the preceding claims,
**characterized in that**
a height (ha) of channels (am) for the coolant (KM) on the anode-side plate (20) is less than
a height (hk) of channels (km) for the coolant (KM) on the cathode-side plate (10).

10. Fuel cell system (1) having at least one bipolar plate (100) according to any of the preceding claims.

## Revendications

1. Plaque bipolaire (100) pour un système de pile à combustible (1), présentant :
une plaque côté cathode (10),
qui présente, sur un premier côté (11), une première structure de canaux (K1) pour un réactif contenant de l'oxygène (O2) et
sur un deuxième côté (12), une deuxième structure de canaux (K2) pour un réfrigérant (KM), et
une plaque côté anode (20),
qui présente, sur un premier côté (21), une première structure de canaux (A1) pour un réactif contenant du combustible (H2) et
sur un deuxième côté (22), une deuxième structure de canaux (A2) pour un réfrigérant (KM),
la plaque côté cathode (10) et la plaque côté anode (20) s'appliquant l'une contre l'autre par les deuxièmes côtés (12, 22) pour le réfrigérant (KM),
**caractérisée**
**en ce que** la première structure de canaux (K1) de la plaque côté cathode (10) se distingue géométriquement de la deuxième structure de canaux (K2) de la plaque côté cathode (10),
**caractérisée**
**en ce que** la plaque côté cathode (10) présente, vue dans une direction (R) transversale à des canaux individuels (k1, k2, km) de la première structure de canaux (K1) et de la deuxième structure de canaux (K2),
alternativement un canal (km) pour le réfrigérant (KM) et deux canaux (k1, k2) pour le réactif contenant de l'oxygène (O2).

2. Plaque bipolaire (100) selon la revendication 1,
**caractérisée**
**en ce que** la première structure de canaux (K1) de la plaque côté cathode (10) présente des canaux (k1, k2) doubles et/ou divisés en deux pour le réactif contenant de l'oxygène (O2),
et/ou en ce que la deuxième structure de canaux (K2) de la plaque côté cathode (10) présente des canaux simples (km) pour le réfrigérant (KM).

3. Plaque bipolaire (100) selon la revendication précédente,
**caractérisée**
**en ce que** les doubles canaux (k1, k2) de la première structure de canaux (K1) sont séparés les uns des autres par une nervure (Sk),
et/ou en ce que les doubles canaux (k1, k2) de la première structure de canaux (K1) sont réalisés par deux rainures estampées indépendamment l'une de l'autre.

4. Plaque bipolaire (100) selon l'une quelconque des revendications précédentes,
**caractérisée**
**en ce que** la première structure de canaux (A1) de la plaque côté anode (20) se distingue géométriquement de la deuxième structure de canaux (A2) de la plaque côté anode (20).

5. Plaque bipolaire (100) selon la revendication précédente,
**caractérisée**
**en ce que** la plaque côté anode (20) présente, vue dans une direction (R) transversale à des canaux individuels (a1, a2, am) de la première structure de canaux (A1) et de la deuxième structure de canaux (A2), alternativement un canal (am) pour le réfrigérant (KM) et deux canaux (a1, a2) pour le réactif contenant du combustible (H2).

6. Plaque bipolaire (100) selon l'une quelconque des revendications 1 à 3 précédentes,
**caractérisée**
**en ce que** la première structure de canaux (A1) de la plaque côté anode (20) et la deuxième structure de canaux (A2) de la plaque côté anode (20) sont réalisées de manière géométriquement identique.

7. Plaque bipolaire (100) selon l'une quelconque des revendications précédentes,
**caractérisée**
**en ce que** la première structure de canaux (A1) présente, sur la plaque côté anode (20), des atterrissages (La) sous les canaux (am) pour le réfrigérant (KM),
qui sont réalisés pour être appliqués sur une anode (A) d'une pile à combustible du système de pile à combustible (1),
et **en ce que** la première structure de canaux (K1) sur la plaque côté cathode (10) présente des atterrissages (Lk) sous les canaux (km) pour le réfrigérant (KM),
qui sont réalisés pour être appliqués sur une cathode (K) d'une pile à combustible du système de pile à combustible (1),
les atterrissages (La) sur la plaque côté anode (20) présentant une largeur (ba) plus grande
qu'une largeur (bk) d'atterrissages (Lk) sur la plaque côté cathode (10).

8. Plaque bipolaire (100) selon l'une quelconque des revendications précédentes,
**caractérisée**
**en ce qu'**un angle de démoulage (∝a) de canaux (am) pour le réfrigérant (KM) sur la plaque côté anode (20) est plus petit
qu'un angle de démoulage (∝k) de canaux (km) pour le réfrigérant (KM) sur la plaque côté cathode (10).

9. Plaque bipolaire (100) selon l'une quelconque des revendications précédentes,
**caractérisée**
**en ce qu'**une hauteur (ha) de canaux (am) pour le réfrigérant (KM) sur la plaque côté anode (20) est plus petite
qu'une hauteur (hk) de canaux (km) pour le réfrigérant (KM) sur la plaque côté cathode (10).

10. Système de pile à combustible (1) avec au moins une plaque bipolaire (100) selon l'une quelconque des revendications précédentes.
